# EUROPEAN PATENT SPECIFICATION

(11) **EP 3 213 972 B1**
(45) Date of publication and mention of the grant of the patent: **20.07.2022**
(21) Application number: 17159272.8
(22) Date of filing: 03.03.2017
(51) Int. Cl.: B60W 10/02, B60W 10/11, B60W 30/09, B60W 30/186, B60W 10/184, B60W 30/18

(54) **SYSTEM AND METHOD FOR CONTROLLING THE CREEPING FUNCTION IN AN INDUSTRIAL VEHICLE WITH AN AUTOMATED TRANSMISSION**
SYSTEM UND VERFAHREN ZUM REGELN DER KRIECHFUNKTION IN EINEM NUTZFAHRZEUG MIT EINEM AUTOMATIKGETRIEBE
SYSTÈME ET PROCÉDÉ DE CONTRÔLE DU MODE DE MARCHE RAMPANTE DANS UN VÉHICULE INDUSTRIEL AVEC UNE TRANSMISSION AUTOMATIQUE

(30) Priority: 04.03.2016 IT UA20161365
(43) Date of publication of application: 06.09.2017
(73) Proprietor: Iveco S.p.A., 10156 Torino (IT)
(72) Inventor: STEINKELLNER, Oliver, 89134 Blaustein (DE); GENNARI, Paolo, 10137 Torino (IT); ESILIATO, Antonio, 10136 Torino (IT)
(74) Representative: Franzolin, Luigi

(56) References cited:
- DE-A1-102009 052 227
- DE-A1-102010 026 762
- DE-A1-102010 032 436
- DE-A1-102015 008 239
- DE-A1-102015 210 696
- US-A1- 2006 004 506
- US-A1- 2014 095 038
- US-A1- 2014 309 901

## Description

### TECHNICAL FIELD

The present invention relates to a system and method for controlling the creeping function in an industrial vehicle with an automated transmission.

### BACKGROUND OF THE INVENTION

In vehicles provided with an automatic transmission with a torque converter, the so-called "creeping" function is available, i.e. start by releasing the brake pedal, without pressing the accelerator pedal.

The same function, for driver's comfort reasons, has been made available also on industrial vehicles provided with an automated transmission with automatic clutch control.

DE 10 2015 210696 A1 discloses a method for controlling the creeping function, wherein a creeping torque is applied when the braking pedal is released; a braking device is applied thereafter, if a temperature at relevant points of the drive train is detected which is greater than a given threshold.

DE 10 2009 052227 A1 discloses a method for controlling the creeping function, wherein a creeping torque is applied when the braking pedal is released; a braking device is applied thereafter if a speed I detected which is lower than a give threshold.

Other known system and methods are disclosed in documents US2014309901 A1, DE102010032436 A1, US2006004506 A1, US2014095038 A1 or DE102010026762 A1.

An object of the present invention is to provide a system for controlling the creeping function, as well as a control method thereof, optimizing vehicle safety and the driver's comfort.

### SUMMARY OF THE INVENTION

The aforesaid object is attained by a control system comprising the features of claim 1 and a control method comprising the features of claim 6. Preferred embodiments are defined in the dependent claims.

### BRIEF DESCRIPTION OF DRAWINGS

For a better understanding of the present invention, a preferred embodiment is described hereunder, by way of non-limiting example and with reference to the attached drawings, in which:
- Figure 1 is a block diagram of a control system of an industrial vehicle managing the creeping function in accordance with the present invention;
- Figure 2 is a block diagram showing the signals exchanged among the modules of the control system of figure 1; and
- Figure 3 is a flow chart of a method of controlling the creeping function carried out by the control system of figures 1 and 2.

### DETAILED DESCRIPTION OF THE INVENTION

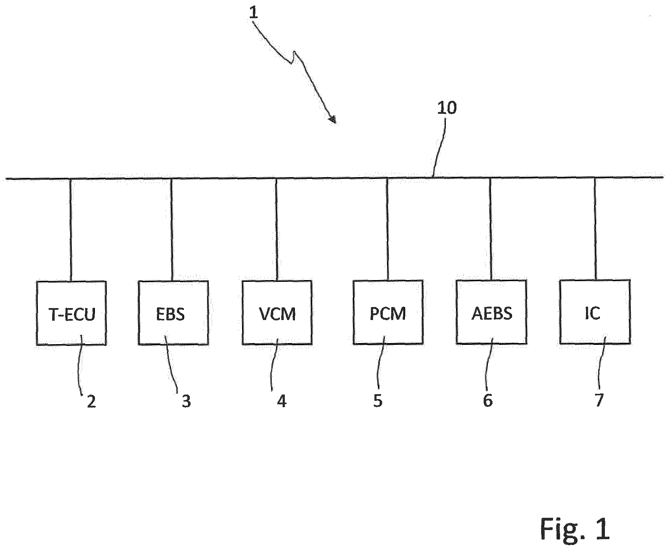

Referring to figure 1, numeral 1 designates as a whole a control system of an industrial vehicle.

Vehicle 1 includes a plurality of control module 2-7 connected with one another via a vehicle communication network, e.g. a CAN bus 10. In particular, system 1 includes a vehicle transmission control unit (T-ECU) 2, an Electronic Braking Controller (EBC) 3, a Vehicle Control Module (VCM) 4, a Power take-off Control Module (PCM) 5, a module 6 for controlling the emergency braking (AEBS - Advanced Emergency Braking System) via a radar, and a man-machine interface (Instrument Cluster - IC) 7.

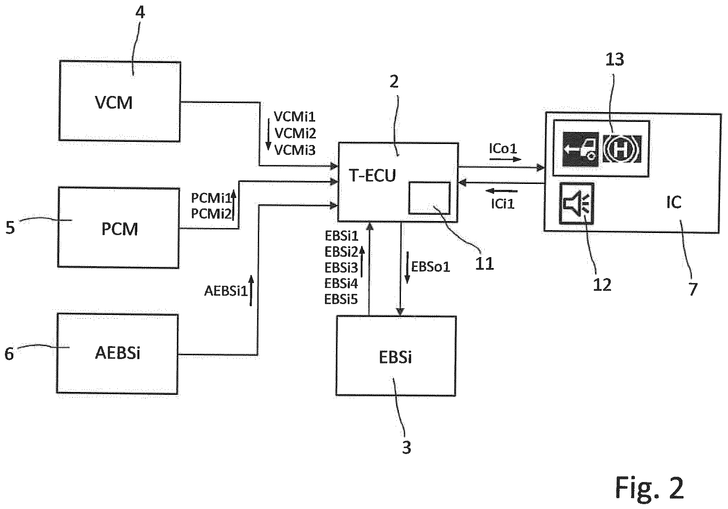

Acronyms indicate in parentheses and in the diagrams of figures 1 and 2 will be used hereinafter for the sake of brevity.

T-ECU 2 dialogues with the other modules of system 1 via bus 10, exchanging data as shown in figure 2.

In particular, T-ECU 2 receives the following input data relevant to the creeping function:
From EBS 3:
   EBSi1: brake actuation switch
   EBSi2: brake pedal position
   EBSi3: brake pedal pressed
   EBSi4: halt brake state
   EBSi5: vehicle speed
From VCM 4:
   VCMi1: motor rpm
   VCMi2: accelerator pedal position
   VCMi3: engine idle rpm
From PCM 5:
   PCMi1: use of at least one power take-off (PTO)
   PCMi2: use of a rear footboard
   (the use of these data will be explained in the following)
From AESB 6:
   AESBi1: state of emergency brake
From IC 7:
   ICi1: creeping function enablement state. Conveniently, this parameter (creeping enabled/disabled) can be set in IC 7 by means of a quick selection menu or a dashboard button.

T-ECU also comprises a memory 11 in which a plurality of parameters can be stored, conveniently at production. These parameters concern the activation conditions of the creeping function and can be set based on the user's preferences, e.g. based on the intended use of the vehicle.

One of the aforesaid parameters (P1) can be the engine idle rpm threshold for enabling the creeping function. Since the engine idle speed is variable depending on the conditions of use of the vehicle, disabling the creeping function if the engine idle speed exceeds a predetermined threshold can be useful to avoid that the vehicle starts with too high a speed.

A second parameter (P2) can be creeping enablement with at least an active PTO (Y/N): depending on the use of the vehicle, the use of a power take-off in stationary conditions or the permanent use of a power take-off while running can be expected. The parameter at issue is conveniently set to "NO" for safety reasons.

A third parameter (P3) can be, e.g., creeping enablement with rear footboard in use (Y/N). In some special vehicles, such as e.g. garbage collectors, vehicle movement with a man on the rear footboard is allowed. The parameter at issue is conveniently set to "NO" for safety reasons.

As opposed to being pre-set in T-ECU 2, the aforesaid parameters could be settable on IC7 via a suitable interface, as for parameter TC2.

Finally, T-ECU 2 receives a plurality of data generated by transmission internal sensors or estimated thereon, namely:
T1: gear engaged
T2: state of transmission
T3: resistance to motion
T4: slope.

T-ECU 2 sends IC 7 data ICo1 for visual and/or acoustic indication of information. In particular, IC 7 preferably includes a buzzer 12 and a display 13 for displaying messages and symbols.

Finally, T-ECU 2 sends data ESBo1 for activating the vehicle service brakes.

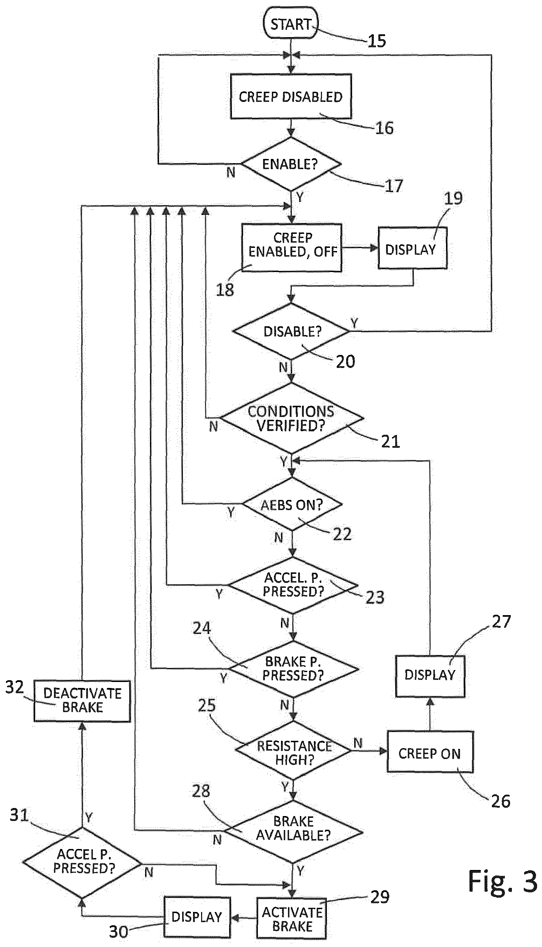

The control method carried out by system 1 is described hereafter with reference to the flow chart of figure 3.

From a start block 15, a block 16 is reached where creeping enablement parameter Ici1 is set to "disabled". In the following block 17, presence of an enablement command to IC 7 is checked. In the negative, program goes back to block 16; in the positive, program goes to block 18, where the IC1 parameter is set to "enabled" and a visual indication on the display of IC 7 is activated via a corresponding signal ICo1 (block 19). The creeping function is thus enabled but remains deactivated.

In a successive block 20, the presence of a disablement command at IC 7 is checked.

In the positive, program goes back to block 16; in the negative, program proceeds to block 21 where the conditions for the activation of creeping are checked, and in particular whether:
EBSi5 indicates that the vehicle is still;
PCMi1 indicates that power take-offs are not in use;
PCMi2 indicates that the rear footboard is not in use.

If at least one of the preceding conditions is not fulfilled, program goes back to block 18. If all conditions are fulfilled, instead, program goes to block 22 where possible actuation of emergency brake (signal AEBSi1) is checked. If emergency brake is activated, program returns to block 18, on the contrary program proceeds to bloc 23, which verifies whether the accelerator pedal is pressed. In the positive, program returns to block 18; in the negative, program proceeds to block 24. The latter checks whether the brake pedal is pressed. To that end, all three signals EBSi1, EBSi2 and EBSi3 are used, so as to create a redundancy for safety reasons. If at least one of the aforesaid signals indicates that the brake pedal is pressed, program goes back to block 18. On the contrary, program proceeds to block 25 that verifies if resistance to motion (parameter T3) is too high. This evaluation can be made, e.g., by estimating in a known manner the vehicle mass and comparing it with admissible values stored in a map as a function of the gear engaged (parameter T1), slope (parameter T4) and the state of the transmission (parameter T2). The state of the transmission, that may reveal an overload condition of the clutch, can be indicated e.g. by temperature estimated based on the number and frequency of actuations executed in a predetermined time interval.

If resistance to motion is admissible, program goes to block 26 where the creeping function is enabled, and a corresponding value of signal ICo1 is sent to IC 7 for activating a visual indication on display 13 (block 27).

If instead resistance to motion is high, which condition identifies the risk for the vehicle to roll back, program proceeds to block 28, in which a check that the activation of service brakes is available (no error signals) in made. In the positive, in the successive block 28 brakes are actuated, and a corresponding value of signal ICo1 is sent to IC 7 for actuating a visual indication on display 13 (block 30).

Vehicle roll back is thus prevented without any need for the driver to press the accelerator pedal.

Block 31 verifies the position of the accelerator pedal (signal VCMi2). If accelerator pedal is pressed, the automatic braking function is deactivated (block 32) and program returns to block 18. In the opposite case, program goes back to block 29 and braking is continued.

If activation of the service brake is not available, program returns to block 18 and the driver, in the light of the warning that automatic braking is not available, must press the accelerator pedal to start the vehicle.

The control method performed by system 1, already apparent from the above, is the following.

When the driver requests to enable the creeping function via IC 7, the system verifies whether conditions for enablement exist. In particular, it is checked whether the vehicle is still, the engine idle speed is below the set threshold, that no power take-off is used and the rear footboard (in the vehicles provided with that) is not used.

If the aforesaid conditions are met and emergy braking system is not active, if start conditions are favourable, the system activates the creeping function, and vehicle starts when brake pedal is released without any need to press the accelerator pedal.

If the system estimates that resistance to motion is too high, and therefore there is a risk of rolling back, the system, subject to an availability check, automatically activates the service brake. In this case the driver, conveniently warned by a signal, must press the brake pedal to start the vehicle.

From an analysis of control system 1 and the relevant control method disclosed herein, the advantages achieved by the present invention are apparent.

In particular, when the creeping function is enabled, control automatically prevents the vehicle from rolling back in a slope when a condition of too high resistance to motion or clutch overload occurs. Control moreover interacts with other safety functions of the vehicle, such as emergency braking, the use of a power take-off or the presence of an operator on the rear footboard, so as to deactivate the creeping function in presence of risks for the vehicle safety.

It is finally clear that modifications and variants can be brought to system 1 and the relevant control method without departing from the scope of the claims.

## Claims

1. A control system of an industrial vehicle provided with an automated transmission comprising a plurality of modules (2-7) communicating among one another via a vehicle communication network (10), said plurality of modules (2-7) including at least a transmission control unit (2), a braking control unit (3) and a man-machine interface (7), the transmission control unit (2) including means (26) for activating a creeping function allowing the vehicle to start by releasing the brake pedal without pressing the accelerator pedal, wherein
said transmission control unit (2) includes means for detecting data relating to the resistance to motion of the vehicle (25, said transmission control unit (2) including means (18) for deactivating the creeping function and service braking control means (29) activatable in response to motion resistance data indicating a risk for the vehicle to roll back; **characterized by**
said control system further comprising detection means for detecting the use of at least a power take-off, said means (18) for deactivating the creeping function being operable in response to data indicating the use of at least a power take-off.

2. System as claimed in claim 1, **characterized in that** said means for detecting motion resistance data (24) include acquisition means for acquiring slope, engaged gear and vehicle mass.

3. System as claimed in claim 1 or 2, **characterized by** comprising detecting means for detecting the state of the transmission configured to detect a clutch overload condition, said means for deactivating the creeping function being operable in response to data indicating the clutch overload condition.

4. System as claimed in one of the preceding claims, **characterized by** comprising emergency braking means (6) operable in response to data indicating a possible collision, said means (18) for deactivating the creeping function being operable in response to data (AEBS1) indicating the emergency braking activation.

5. System as claimed in one of the preceding claims, **characterized in** comprising detection means for detecting the use of at least a rear footboard of the vehicle, said means for deactivating the creeping function being operable in response to data indicating the use of said footboard.

6. Method of controlling the creeping function in an industrial vehicle provided with an automated transmission and a control system comprising a plurality of modules (2-7) communicating among one another via a vehicle communication network (10), said plurality of modules (2-7) including at least a transmission control unit (2), a braking control unit (3) and a man-machine interface (7), the transmission control unit (2) including means (26) for activating a creeping function allowing the vehicle to start by releasing the brake pedal without pressing the accelerator pedal, the method comprising the step of detecting data relating to the resistance to motion of the vehicle (25) and the steps of deactivating the creeping function (18) and activating the vehicle service braking (29) in response to motion resistance data indicating a risk for the vehicle to roll back; **characterized by**
said method further comprising the steps of detecting the use of at least one power take-off and deactivating the creeping function in response to data indicating the use of at least one power take-off.

7. Method as claimed in claim 6, **characterized in that** the step of detecting data relating to the resistance to motion of the vehicle (25) includes the steps of acquiring data relating to slope, engaged gear and mass of the vehicle.

8. Method as claimed in claim 6 or 7, **characterized by** comprising the steps of detecting data relating to the state of the transmission and deactivating the creeping function in response to data indicating a clutch overload condition.

9. Method as claimed in any of claims 6 to 8, **characterized by** comprising the steps of detecting collision risks, activating emergency braking and deactivating the creeping function in response to data indicating activation of emergency braking.

10. Method as claimed in any of claims 6 to 9, **characterized by** comprising the steps of detecting the use of a rear footboard of the vehicle and deactivating the creeping function in response to data indicating the use of said footboard.

## Patentansprüche

1. Ein Steuerungssystem eines Nutzfahrzeugs mit einem Automatikgetriebe, umfassend eine Vielzahl an Modulen (2-7), die untereinander über ein Fahrzeugkommunikationsnetzwerk (10) kommunizieren, wobei die Vielzahl an Modulen (2-7) zumindest eine Getriebesteuereinheit (2), eine Bremssteuereinheit (3) und eine Mensch-Maschine-Schnittstelle (7) umfasst, wobei die Getriebesteuereinheit (2) Mittel (26) zur Aktivierung einer Kriechfunktion umfasst, die das Starten das Fahrzeugs durch Lösen des Bremspedals gestatten, ohne das Gaspedal zu drücken, wobei die Getriebesteuereinheit (2) Mittel zur Datenerfassung in Bezug auf den Widerstand gegen eine Bewegung des Fahrzeugs (25) umfasst, wobei die Getriebesteuereinheit (2) Mittel (18) zur Deaktivierung der Kriechfunktion und Steuerungsmittel (29) der Betriebsbremse umfasst, die in Abhängigkeit von Bewegungswiderstandsdaten aktivierbar sind, sofern diese das Risiko eines Zurückrollens des Fahrzeugs anzeigen, **dadurch gekennzeichnet,**
**dass** das Steuerungssystem des Weiteren Erkennungsmittel zur Erkennung der Verwendung zumindest eines Nebenabtriebs umfasst,
wobei die Mittel (18) zur Deaktivierung der Kriechfunktion in Abhängigkeit von Daten betätigbar sind, die die Verwendung zumindest eines Nebenabtriebs anzeigen.

2. System nach Anspruch 1, **dadurch gekennzeichnet, dass** das die Mittel zur Erfassung von Bewegungswiderstandsdaten (24) Erfassungsmittel zur Erfassung von Steigung, eingelegtem Gang und Masse des Fahrzeugs umfassen.

3. System nach Anspruch 1 oder 2, **dadurch gekennzeichnet, dass** das System Erkennungsmittel zur Erfassung des Getriebezustands, dazu vorgesehen, einen Überlastzustand der Kupplung zu erkennen, umfasst, wobei die Mittel zur Deaktivierung der Kriechfunktion in Abhängigkeit von Daten betätigbar sind, die auf einen Überlastzustand der Kupplung anzeigen.

4. System nach einem der vorherigen Ansprüche, **dadurch gekennzeichnet, dass** das System Notbremsmittel (6), die in Abhängigkeit von Daten betätigbar sind, die eine mögliche Kollision anzeigen, umfasst, wobei die Mittel (18) zur Deaktivierung der Kriechfunktion in Abhängigkeit von Daten (AEBS1) betätigbar sind, die eine Aktivierung der Notbremse anzeigen.

5. System nach einem der vorherigen Ansprüche, **dadurch gekennzeichnet, dass** das System Erkennungsmittel zur Erkennung der Benutzung zumindest eines hinteren Trittbretts am Fahrzeug umfasst, wobei die Mittel zur Deaktivierung der Kriechfunktion in Abhängigkeit von Daten betätigbar ist, die auf die Benutzung des Trittbretts hinweisen.

6. Verfahren zur Steuerung der Kriechfunktion an einem Nutzfahrzeug mit einem Automatikgetriebe und einem Steuerungssystem, dass eine Vielzahl an Modulen (2-7), die untereinander über ein Fahrzeugkommunikationsnetzwerk (10) kommunizieren, wobei die Vielzahl an Modulen (2-7) zumindest eine Getriebesteuereinheit (2), eine Bremssteuereinheit (3) und eine Mensch-Maschine-Schnittstelle (7) umfasst, wobei die Getriebesteuereinheit Mittel (26) zur Aktivierung einer Kriechfunktion umfasst, die das Starten das Fahrzeugs durch Lösen des Bremspedals gestatten, ohne das Gaspedal zu drücken, wobei das Verfahren den Schritt zur Erkennung von Daten in Abhängigkeit vom Widerstand gegen eine Bewegung des Fahrzeugs (25) und die Schritte zur Deaktivierung der Kriechfunktion (18) und zur Aktivierung der Betriebsbremse (29) des Fahrzeugs in Abhängigkeit von Bewegungswiderstandsdaten, die das Risiko eines Zurückrollens des Fahrzeugs anzeigen, umfasst; **dadurch gekennzeichnet,**
**dass** das Verfahren des Weiteren die Schritte zur Erkennung der Verwendung zumindest eines Nebenabtriebs und zur Deaktivierung der Kriechfunktion in Abhängigkeit von Daten, die die Verwendung zumindest eines Nebenabtriebs anzeigen, umfasst.

7. Verfahren nach Anspruch 6, **dadurch gekennzeichnet, dass** der Schritt zur Erfassung von Daten in Abhängigkeit vom Bewegungswiderstand des Fahrzeugs (25) die Schritte zur Erfassung von Daten in Abhängigkeit von Steigung, eingelegtem Gang und Masse des Fahrzeugs umfasst.

8. Verfahren nach den Ansprüchen 6 oder 7, **dadurch gekennzeichnet, dass** das System die Schritte zur Erfassung von Daten in Abhängigkeit vom Getriebezustand und zur Deaktivierung der Kriechfunktion in Abhängigkeit von Daten, die auf einen Überlastzustand der Kupplung hinweisen, umfasst.

9. Verfahren nach den Ansprüchen 6 bis 8, **dadurch gekennzeichnet, dass** das System die Schritte zur Erkennung eines Kollisionsrisikos, zur Aktivierung der Notbremse und zur Deaktivierung der Kriechfunktion in Abhängigkeit von Daten, die auf eine Aktivierung der Notbremse hinweisen, umfasst.

10. Verfahren nach den Ansprüchen 6 bis 9, **dadurch gekennzeichnet, dass** das System die Schritte zur Erkennung der Benutzung eines hinteren Trittbretts am Fahrzeug und zur Deaktivierung der Kriechfunktion in Abhängigkeit von Daten, die auf die Benutzung des Trittbretts hinweisen, umfasst.

## Revendications

1. Système de commande d'un véhicule industriel pourvu d'une transmission automatisée comprenant une pluralité de modules (2-7) communiquant entre eux via un réseau de communication de véhicule (10), ladite pluralité de modules (2-7) incluant au moins une unité de commande de transmission (2), une unité de commande de freinage (3) et une interface homme-machine (7), l'unité de commande de transmission (2) incluant un moyen (26) destiné à activer une fonction marche rampante permettant au véhicule de démarrer en relâchant la pédale de frein sans appuyer sur la pédale d'accélérateur, dans lequel ladite unité de commande de transmission (2) inclut un moyen destiné à détecter des données se rapportant à la résistance à un mouvement du véhicule (25), ladite unité de commande de transmission (2) incluant un moyen (18) destiné à désactiver la fonction marche rampante et un moyen de commande de frein de service (29) activable en réponse à des données de résistance au mouvement indiquant un risque pour le véhicule de reculer ; **caractérisé en ce que**
ledit système de commande comprend en outre un moyen de détection destiné à détecter l'utilisation d'au moins une prise de force, ledit moyen (18) destiné à désactiver la fonction marche rampante pouvant fonctionner en réponse à des données indiquant l'utilisation d'au moins une prise de force.

2. Système selon la revendication 1, **caractérisé en ce que** ledit moyen destiné à détecter des données de résistance au mouvement (24) inclut un moyen d'acquisition destiné à acquérir une pente, un rapport en prise et une masse de véhicule.

3. Système selon la revendication 1 ou 2, **caractérisé en ce qu'**il comprend un moyen de détection destiné à détecter l'état de la transmission configuré pour détecter un état de surcharge d'embrayage, ledit moyen destiné à désactiver la fonction marche rampante pouvant fonctionner en réponse à des données indiquant l'état de surcharge d'embrayage.

4. Système selon l'une des revendications précédentes, **caractérisé en ce qu'**il comprend un moyen de freinage d'urgence (6) pouvant fonctionner en réponse à des données indiquant une collision possible, ledit moyen (18) destiné à désactiver la fonction marche rampante pouvant fonctionner en réponse à des données (AEBS1) indiquant l'activation de freinage d'urgence.

5. Système selon l'une des revendications précédentes, **caractérisé en ce qu'**il comprend un moyen de détection destiné à détecter l'utilisation d'au moins un marchepied arrière du véhicule, ledit moyen destiné à désactiver la fonction marche rampante pouvant fonctionner en réponse à des données indiquant l'utilisation dudit marchepied.

6. Procédé de commande de la fonction marche rampante dans un véhicule industriel pourvu d'une transmission automatisée et d'un système de commande comprenant une pluralité de modules (2-7) communiquant entre eux via un réseau de communication de véhicule (10), ladite pluralité de modules (2-7) incluant au moins une unité de commande de transmission (2), une unité de commande de freinage (3) et une interface homme-machine (7), l'unité de commande de transmission (2) incluant un moyen (26) destiné à activer une fonction marche rampante permettant au véhicule de démarrer en relâchant la pédale de frein sans appuyer sur la pédale d'accélérateur, le procédé comprenant l'étape consistant à détecter des données se rapportant à la résistance à un mouvement du véhicule (25) et les étapes consistant à désactiver la fonction marche rampante (18) et à activer le freinage de service de véhicule (29) en réponse à des données de résistance au mouvement indiquant un risque pour le véhicule de reculer ; **caractérisé en ce que**
ledit procédé comprend en outre les étapes consistant à détecter l'utilisation d'au moins une prise de force et à désactiver la fonction marche rampante en réponse à des données indiquant l'utilisation d'au moins une prise de force.

7. Procédé selon la revendication 6, **caractérisé en ce que** l'étape de détection de données se rapportant à la résistance à un mouvement du véhicule (25) inclut les étapes consistant à acquérir des données se rapportant à la pente, au rapport en prise et à la masse du véhicule.

8. Procédé selon la revendication 6 ou 7, **caractérisé en ce qu'**il comprend les étapes de détection de données se rapportant à l'état de la transmission et de désactivation de la fonction marche rampante en réponse à des données indiquant un état de surcharge d'embrayage.

9. Procédé selon l'une quelconque des revendications 6 à 8, **caractérisé en ce qu'**il comprend les étapes de détection de risques de collision, d'activation de freinage d'urgence et de désactivation de la fonction marche rampante en réponse à des données indiquant l'activation de freinage d'urgence.

10. Procédé selon l'une quelconque des revendications 6 à 9, **caractérisé en ce qu'**il comprend les étapes de détection de l'utilisation d'un marchepied arrière du véhicule et de désactivation de la fonction marche rampante en réponse à des données indiquant l'utilisation dudit marchepied.
